# EUROPEAN PATENT APPLICATION

(11) **EP 4 335 835 A1**
(43) Date of publication of application: **13.03.2024**
(21) Application number: 23461648.0
(22) Date of filing: 07.09.2023
(51) Int. Cl.: C05D 9/02, C05F 5/00

(54) **METHOD AND SYSTEM FOR PRODUCING A MICRONUTRIENT FERTILIZER**

(30) Priority: 07.09.2022 PL 44222022
(71) Applicant: Politechnika Wroclawska, 50-370 Wrocklaw (PL); Ekoplon spolka z ograniczona odpowiedzialnosci sp.k., 28-225 Szydlow (PL)
(72) Inventor: Chojnacka, Katarzyna, 55-002 Gajków (PL); Witek-Krowiak, Anna, 51-215 Wroc aw (PL); Skrzypczak, Dawid, 51-317 Wroc aw (PL); Mikula, Katarzyna, 32-660 Che mek (PL); Izydorczyk, Grzegorz, 42-160 Krzepice (PL)
(74) Representative: Witek, Rafal

(57) **Abstract**

The invention relates to a method for producing a micronutrient fertiliser, whereby biomass selected from a group consisting of currant seeds, press cakes, rapeseed meal, soybean meal or waste after supercritical CO₂ extraction of alfalfa and goldenrod, and combinations thereof, is intensively sprayed with an aerosol of a solution of sulphate salts of trace elements, containing Cu(II) ions at a concentration of 500 to 30,000 mg/L, Mn(II) at a concentration of 500 to 30,000 mg/L and Zn(II) at a concentration of 500 to 30,000 mg/L, with a pH in the range from 3.0 to 6.0, preferably generated at a pressure of 0.5 to 5 bar. The biomass is possibly enriched in Fe(II) ions, by spraying with an aerosol of a solution of iron sulphate salt, containing Fe(II) ions at a concentration of 500 to 30,000 mg/L.

The subject of the invention is also a system for producing the micronutrient fertiliser, which is equipped with devices for dosing and feeding of biosorption substrates, cooperating with an aerosol generating module. Wherein the module for dosing and feeding of the micronutrient solution comprises a tank (**RZ**), connected to the module generating aerosol from the micronutrient solution, pumped using a pump (**RW**), and a module for dosing and feeding of the biomass comprises a weigher (**BW**), from which the biomass is introduced to a ribbon conveyor (**BP**), above which spraying nozzles (**BD**) are located, to which the micronutrient solution is fed simultaneously with compressed air pumped in a spray module from a compressor (**NS**).

In a variant of the invention, the system for producing micronutrient fertilizer comprises a fluidized bed column to which the module for dosing and feeding of the micronutrient solution and the aerosol generating module are connected. Wherein the column is provided with an opening for biomass loading and a biomass fluidization assembly, which is equipped with a fan, connected to a heater, from which air is introduced into the fluidized bed column. The module for dosing and feeding of the micronutrient solution comprises a tank from which the micronutrient solution is supplied to a spray nozzle located in the fluidized bed column, the aerosol generating module comprises a compressor from which compressed air is pumped to the spray nozzle located in the fluidized bed column.

## Description

The subject of the invention is a waste-free method for producing micronutrient fertilizer with high bioavailability of nutrients and a system for implementing the method for producing micronutrient fertilizer.

A method for producing fertilizer based on biomass, such as berry seeds, microalgae or mushroom substrate, enriched with Cu(II), Mn(II) and Zn(II) ions in the sorption process, is known from the Polish patent PL225939. The content of micronutrients in the product, which can be used alone or combined with a NPK fertilizer, is: 12-40 mg/g Cu, 3-12 mg/g Mn and 5-35 mg/g Zn. In turn, the patent application WO2013123032A1 presents a method for producing a fertilizer product from microalgae enriched with both macro- (N, P, K, S, Ca, Mg) and microelements (Zn, Fe, Cu, Mn, B, Mo, Cl). The salt solution and microalgae (*Chlorella* or *Spirulina*) are incubated to absorb fertilizer nutrients and incorporate them into metabolic pathways. Also a method for producing biochar enriched with iron ions is known from the US patent application US20210395159, where the ratio of Fe(III) to Fe(II) ions in the material ranges from 5:1 to 10:1. Biomass, in the form of corn straw, is enriched with iron ions, and then subjected to pyrolysis in an oxidizing environment. The obtained biochar is then enriched with phosphorus by soaking the material in a solution of potassium dihydrogen phosphate at a temperature of 18°C to 28°C and is intended for use as a fertilizer with a slow release of phosphorus.

The literature describes numerous methods for obtaining fertilizers or fertilizer additives using various types of biomass, including: soy [*Witkowska, Z., Chojnacka, K., Korczyński, M., Swiniarska, M., Saeid, A., Opaliński, S., Dobrzański, Z., 2014. Soybean meal enriched with microelements by biosorption* - *A new biological feed supplement for laying hens. Part I. Performance and egg traits. Food Chem. 151],* alfalfa and goldenrod after extraction with supercritical carbon dioxide [*Izydorczyk, G., Chojnacka K., Kocek D., Ligas, B., Witek Krowiak, 2018. Technologia wytwarzania nawozów mikro-elementowych na bazie lucerny i nawloci. Przem. Chem. 97, 1764-1768]* or the algae *Enteromorpha prolifera* and *Cladophora sp. [Michalak, I., Chojnacka, K., Dobrzański, Z., Górecki, H., Zielińska, A., Korczyński, M., Opaliński, S., 2011. Effect of macro algae enriched with microelements on egg quality parameters and mineral content of eggs, eggshell, blood, feathers and droppings. J. Anim. Physiol. Anim. Nutr. (Berl). 95, 374-387*]*.* The described methods are based on the ability of functional groups located on the biomass surface to bind micronutrient cations - zinc (Zn(II)), copper (Cu(II)), manganese (Mn(II)), chromium (Cr(III) ), iron (Fe(II)), or magnesium (Mg(II)) [Michalak, I., Godlewska, K., Marycz, K., 2019. Biomass Enriched with Minerals via Biosorption Process as a Potential Ingredient of Horse Feed. Waste and Biomass Valorization 10, 3403-3418]. Micronutrient fertilizers are intended for fertilizing plants, their proper nutrition and biofortification of edible plant parts with biologically important micronutrients [*Izydorczyk G., Sienkiewicz-Cholewa U., Basladyńska S., Kocek D., Mironiuk M., Chojnacka K., 2020. New environmentally friendly bio-based micronutrient fertilizer by biosorption: From laboratory studies to the field. Sci. Total Environ. 710, 136061].*

Recently, the most frequently used methods for producing fertilizers and fertilizer additives based on material of biological origin, using biosorption of micronutrients into the biomass, are carried out in a solution containing micronutrient ions. These methods, compared to the classical method of providing micronutrients to plants in the form of mineral salts, are characterized by better bioavailability of micronutrients and a high degree of utilization by plants during the entire growing season. As a result of using fertilizers enriched with micronutrients via biosorption, an increased concentration of micronutrients in plant tissues was achieved [*Samoraj M., Tuhy* 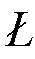 *., Chojnacka, K., 2017. Valorization of biomass into micronutrient fertilizers. Waste Biomas Valorization 10, 925-931*] compared to plants fertilized with mineral salts. In typical solutions, biosorption is carried out using the immersion method, where the biomass is immersed in a solution of micronutrients. However, this method is time-consuming and generates waste in the form of post-sorption solution.

The aim of the invention is to solve the problem of waste-free production of micronutrient fertilizers with high bioavailability without generating additional waste streams and to provide a system for producing micronutrient fertilizers with optimal bioavailability of elements.

The essence of the invention is a method for producing micronutrient fertilizers based on a material of biological origin selected from the group consisting of currant seeds, press cakes, rapeseed meal, soybean meal or waste after supercritical CO₂ extraction of alfalfa and goldenrod, and combinations thereof, in the biosorption process in which the biomass is intensively sprayed with an aerosol of a solution of sulphate salts of trace elements, containing Cu(II) ions at a concentration of 500 to 30,000 mg/L, Mn(II) at a concentration of 500 to 30,000 mg/L and Zn(II) at a concentration of 500 to 30,000 mg/L, with a pH in the range from 3.0 to 6.0 . Preferably, the biomass is sprayed with the aerosol of trace element salts, generated at a pressure of 0.5 to 5 bar, in amounts of 0.001 L/kg to 0.8 L/kg.

Preferably, in parallel with the application of Cu, Mn and Zn ions, the biomass is enriched in Fe ions by spraying with an aerosol of a solution of iron sulphate salt with a pH of 3.0 to 4.5, containing Fe(II) ions at a concentration of 500 to 30,000 mg/L, in an amount of 0.001 L/kg to 0.8 L/kg.

Preferably, the biomass enriched in Fe(II) ions is stabilized with ascorbic acid at a concentration of 0.1 to 20 mg/L, as a preservative, protecting Fe(II) ions against oxidation to Fe(III).

The subject of the invention is also a system for producing micronutrient fertilizer via biosorption process, by spraying the biomass with an aerosol of a micronutrient salt solution. The system is equipped with dosing and feeding devices for biosorption substrates, cooperating with the aerosol generating module, wherein the module for dosing and feeding the micronutrient solution comprises a tank with a mixer, connected to an aerosol generating module via a flow meter that controls the flow rate of the micronutrient solution pumped by a pump. The module for dosing and feeding the biomass to be sorbed comprises an impact weigher from which the biomass is introduced to the beginning of the ribbon conveyor, preferably with a conveying speed of 0.1 m/min up to 5 m/min and a width from 0.5 m to 2 m, above which there are preferably four spray nozzles, to which a solution of micronutrients is fed through a pipeline connected to the flow meter, simultaneously with compressed spraying air pumped in the spray module from a compressor through a pipeline to the nozzles. A receiver for the enriched biomass is at the end of the ribbon conveyor.

In another variant, the system for producing micronutrient fertilizer via biosorption process, in which a dynamic biomass suspension is sprayed with micronutrient salts by an aerosol, comprises a fluidized bed column to which the module for dosing and feeding of the micronutrient solution and the aerosol generating module are connected. The fluidized bed column is provided with an opening for biomass loading and for receiving the biosorption product, as well as with a fluidizer assembly for fluidizing the biomass. The fluidizer assembly for maintaining the biomass in a fluidized state is equipped with a fan connected via a pipeline provided with a valve with a heater from which, through a flow meter with a manometer, air is introduced into the fluidized bed column, from which the air is removed through an outlet conduit. The module for dosing and feeding of the micronutrient solution comprises a tank with the micronutrient salt solution, from which it is supplied via a hose using a pump to the spray nozzle located in the fluidized bed column. The aerosol generating module comprises a compressor from which compressed spraying air is pumped through a pressure hose, through a pressure and flow control valve and a rotameter, to the spray nozzle located in the fluidized bed column.

The method for producing micronutrient fertilizer of the invention, consisting in spraying dry or moist biomass, guarantees optimal binding of micronutrient ions to the functional groups of the biomass, especially carboxyl groups. The advantage of the method is spraying a solution of micronutrients containing several components at the same time, which are bound to the biomass surface in the expected ratio. Due to the ion exchange and surface precipitation occurring during the process, the competition of micronutrient ions between each other is eliminated, which significantly increases the efficiency of the process while reducing costs. Biosorption carried out using the method of the invention provides the complete use of the enrichment solution to bind functional groups with micronutrient ions, which makes the method cheaper, more efficient and waste-free compared to the previously used methods that generate waste post-process solutions from biomass enrichment, containing metal ions. Micronutrient fertilizers obtained using the method of the invention are also characterized by a slow release of micronutrients via desorption, thanks to which the micronutrients are constantly available to plants, resulting in their proper nutrition.

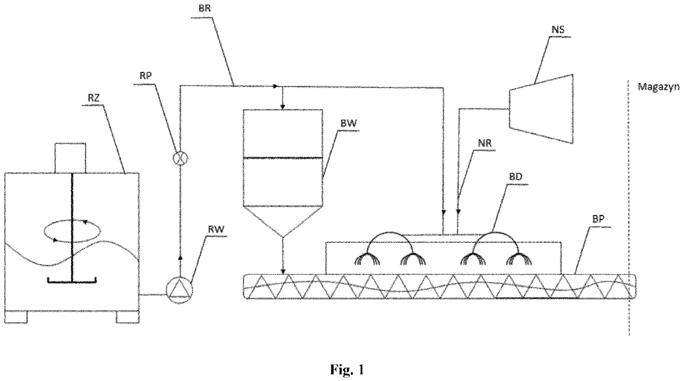

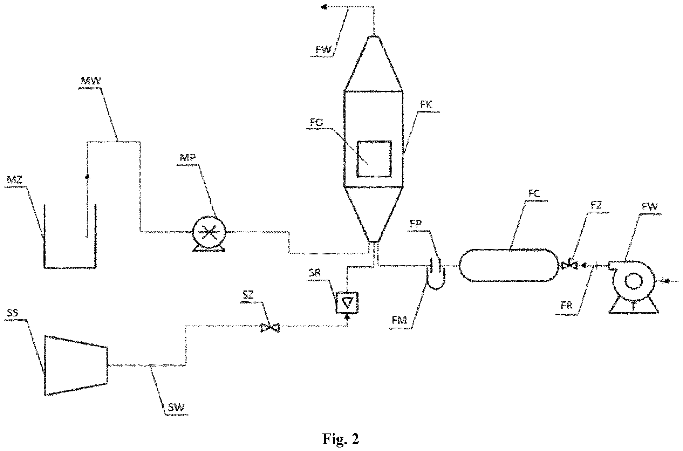

The method of the invention, for the waste-free production of micronutrient fertilizer, is presented in examples of embodiments and in the drawing in which Fig. 1 shows a system for implementing the method for producing micronutrient fertilizer, and Fig. 2 shows a variant of the system for implementing the method for producing micronutrient fertilizer.

### Example 1

According to the method of the invention, in the first step, a solution of trace elements is prepared from sulphate salts dissolved in distilled water, containing 15,000 mg/L Cu(II), 15,000 mg/L Mn(II) and 15,000 mg/L Zn(II) at pH 5.0. Then, using an aerosol generating device at a pressure of up to 3 atmospheres, 3 L of the solution is sprayed per 100 kg of blackcurrant seeds placed in a 1 cm thick layer on an impermeable geotextile. The prepared fertilizer is air dried. The preparation contains trace elements in the following amounts: Cu 1100 mg/kg, Zn 1000 mg/kg, Mn 1100 mg/kg. The content of toxic elements does not exceed the values regulated in fertilizer law: As (<40 mg/kg), Pb (<120 mg/kg), Cd (<3 mg/kg), Hg (<1 mg/kg). The obtained formulation is used for wheat cultivation at a dose of 400 kg/ha. The result is an increased absorption of micronutrients by approximately 5% and a yield approximately 7% higher than for a reference product.

### Example 2

According to the method of the invention, in the first step, a solution of trace elements is prepared from sulphate salts dissolved in distilled water, containing 15,000 mg/L Cu(II), 15,000 mg/L Mn(II) and 15,000 mg/L Zn(II) at pH 5.0 and in parallel, a sulphate salt solution containing 15,000 mg/L Fe(II) at pH 4.5 is prepared. Then, using an aerosol generating device at a pressure of up to 3 atmospheres, 3 L of the solutions containing Cu(II), Mn(II) and Zn(II) ions and Fe(II) ions, is sprayed per 100 kg of ground poppy heads placed in a 1 cm thick layer on an impermeable geotextile. The prepared fertilizer is air dried. The preparation contains trace elements in the following amounts: Cu 900 mg/kg, Zn 1000 mg/kg, Mn 1000 mg/kg, Fe 900 mg/L. The content of toxic elements does not exceed the values regulated in fertilizer law: As (<40 mg/kg), Pb (<120 mg/kg), Cd (<3 mg/kg), Hg (<1 mg/kg). The obtained formulation is used for rapeseed cultivation at a dose of 280 kg/ha. The result is an increased absorption of micronutrients by approximately 8% and a yield approximately 10% higher than for a reference product.

### Example 3

The system for producing micronutrient fertilizer via biosorption process, by spraying biomass with an aerosol of sulphate salt solution, shown in Fig. 1, comprises a module for dosing and feeding of the micronutrient solution, which includes a tank with a mixer (RZ), connected to the aerosol generating module via a flowmeter (RP), controlling the flow rate of the solution with micronutrients, pumped using a centrifugal pump (RW). In addition, the system comprises a module for dosing and feeding of the biomass subject to sorption, which includes an impact weigher (BW), from which the biomass is introduced to the beginning of a ribbon conveyor (BP), with a length of 2 to 20 m, above which at a distance of 1 m four nozzles (BD) are located, at intervals of 0.1 to 1 m, to which the micronutrient solution is fed through a pipeline (BR) connected to a flow meter (RP) simultaneously with compressed spraying air pumped from the compressor (NS) through a pipeline (NR) to the nozzles (BD), belonging to the spray module.

A method for producing the micronutrient fertilizer is implemented in the system, in which 200 kg of a mixture of crushed rapeseed and soybean meal, weighed on the impact weigher (BW), is continuously dosed onto the ribbon conveyor (BP). A solution of trace elements, obtained from sulphate salts dissolved in distilled water, containing: 12,000 mg/L Cu(II), 12,000 mg/L Zn(II), 12,000 mg/L Mn(II) and 12,000 mg/L Fe (II), with the addition of 0.5% wt./wt. ascorbic acid, stabilizing Fe(II) ions, is fed at a flow rate from 0.1 L/min to 5 L/min, to the spray nozzles (BD), using a peristaltic pump (RW) from a tank with a mixer (RZ) through a steel pipeline (BR) through a flow meter (RP). The air spraying the solution is pumped by a compressor (NS) through a steel pipeline (NR) to the outer part of the nozzles (BD). The produced aerosol of the sulphate salt solution of trace elements is sprayed on the biomass during transport to the storage building on the ribbon conveyor (BP) that is 2 m wide, at a conveying speed of 5 m/min. The enriched material is collected at the end of the ribbon conveyor (BP).

The preparation contains trace elements in the following amounts: Cu 900 mg/kg, Zn 900 mg/kg, Mn 1000 mg/kg, Fe 800 mg/L. The content of toxic elements does not exceed the values regulated in fertilizer law: As (<40 mg/kg), Pb (<120 mg/kg), Cd (<3 mg/kg), Hg (<1 mg/kg). The obtained formulation is used for spinach cultivation at a dose of 300 kg/ha. The result is an increased absorption of micronutrients by approximately 5% and a yield approximately 6% higher than for a reference product.

### Example 4

The system for producing micronutrient fertilizer in a variant of the invention, shown in **Fig. 2**, comprises a fluidized bed column (FK) with a biomass fluidization unit and an opening (FO) for biomass loading and for receiving the biosorption product. The fluidizer assembly for maintaining the biomass in a fluidized state is equipped with a fan (FW), connected via a steel pipeline (FR) provided with a valve (FZ) with a three-stage heater, acting as a preheater (FP), from which, through an orifice flow meter (FP) with a pressure gauge filled with water (FM), air is introduced into the fluidized bed column (FK), from which the air is removed through an outlet conduit (FW1). The module for dosing and feeding of the micronutrient solution comprises a tank (MZ) with the micronutrient solution, from which it is supplied via a silicone hose (MW) using a peristaltic pump (MP) to the spray nozzle located in the fluidized bed column (FK). The aerosol generating module comprises a compressor (SS), from which compressed spraying air is pumped through a pressure hose (SW), a pressure and flow control valve (SZ) and a rotameter (SR) to the spray nozzle located in the column (FK).

A method for producing the micronutrient fertilizer is implemented in the system, in which a mixture of waste from supercritical CO₂ extraction of alfalfa and goldenrod in an amount of 0.5 kg with a constant initial humidity of 3% is poured through the opening (FO) into the fluidized bed column (FK). To obtain and maintain the biomass in a fluidized state, the fan (FW) is activated, connected via the steel pipeline (FR) provided with the valve (FZ) enabling the regulation of the air flow rate, with the three-stage heater (FP), from which air, with a volume flow rate of 0.013 m³/s and a temperature of 40°C, is introduced into the lower part of the fluidized bed column (FK) through the orifice flow meter (FP) with a water-filled manometer (FM). The air is removed from the fluidized bed column (FK) through the outlet conduit (FW1) outside the building. From the tank (MZ), using the peristaltic pump (MP), the micronutrient solution, containing: 15,000 mg/L Cu(II), 15,000 mg/L Zn(II), 15 000 mg/L Mn(II) and 15,000 mg/L Fe(II), with the addition of 0.8% wt./wt. ascorbic acid, stabilizing Fe(II) ions is delivered with a mass flow rate of 1.33×10⁻⁷ kg/m³ to the spray nozzle located in the fluidized bed column (FK). Parallel to the spray nozzle in the fluidized bed column (FK), at a set temperature, compressed spraying air is pumped from the compressor (SS), supplied through the pressure hose (SW) through the pressure and flow control valve (SZ) and the rotameter (SR). The pressure and flow rate of the spraying solution are set to 1.8 bar and 7.34×10⁻⁴ m³/s, respectively. The process is carried out for 720 s. After turning off the equipment, the biomass enriched with micronutrients is removed through the opening (FO) from the fluidized bed column (FK).

The obtained fertilizer contains trace elements in the following amounts: Cu 1200 mg/kg, Zn 1100 mg/kg, Mn 1000 mg/kg, Fe 1200 mg/L. The content of toxic elements does not exceed the values regulated in fertilizer law: As (<40 mg/kg), Pb (<120 mg/kg), Cd (<3 mg/kg), Hg (<1 mg/kg). The obtained formulation is used for rapeseed cultivation at a dose of 350 kg/ha. The result is an increased absorption of micronutrients by approximately 7% and a yield approximately 4% higher than a reference product.

## Claims

1. A method for producing micronutrient fertilizer consisting in enrichment of a material of biological origin in micronutrients via biosorption, **characterised in that** the biomass selected from a group consisting of currant seeds, press cakes, rapeseed meal, soybean meal or waste after supercritical CO₂ extraction of alfalfa and goldenrod, and combinations thereof, is intensively sprayed with an aerosol of a solution of sulphate salts of trace elements, containing Cu(II) ions at a concentration of 500 to 30,000 mg/L, Mn(II) at a concentration of 500 to 30,000 mg/L and Zn(II) at a concentration of 500 to 30,000 mg/L, with a pH in the range from 3.0 to 6.0, preferably produced at a pressure of 0.5 to 5 bar.

2. The method of claim 1, **characterised in that** the biomass is enriched in Fe(II) ions by spraying with an aerosol of a solution of iron sulphate salt with a pH of 3.0 to 4.5, containing Fe(II) ions at a concentration of 500 to 30,000 mg/L, in an amount of 0.001 L/kg to 0.8 L/kg.

3. The method of claim 2, **characterised in that** the biomass enriched in Fe(II) ions is stabilised with ascorbic acid at a concentration of 0.1 to 20 mg/L, as a preservative, simultaneously protecting Fe(II) ions against oxidation to Fe(III).

4. A system for producing micronutrient fertilizer by spraying biomass with an aerosol of sulphate salt solution of trace elements, **characterised in that** it is equipped with devices for dosing and feeding of biosorption substrates, cooperating with an aerosol generating module, wherein the module for dosing and feeding of the micronutrient solution comprises a tank with a mixer (**RZ**), connected to the aerosol generating module via a flowmeter (**RP**), controlling the flow rate of the solution with micronutrients, pumped using a centrifugal pump (**RW**), and a module for dosing and feeding of the biomass subject to sorption comprises an impact weigher (**BW**), from which the biomass is introduced to the beginning of a ribbon conveyor (**BP**), above which preferably four spraying nozzles (**BD**) are located, to which the micronutrient solution is fed through a pipeline connected to a flow meter (**RP**) simultaneously with compressed spraying air pumped from a compressor (**NS**) through a pipeline (**NR**) to the nozzles (**BD**), the product receiver being at the end of the ribbon conveyor (**BP**).

5. A system for producing micronutrient fertilizer by spraying biomass with an aerosol of sulphate salt solution of trace elements, **characterised in that** it comprises a fluidized bed column (**FK**) to which a module for dosing and feeding of the micronutrient solution and an aerosol generating module are connected, wherein the fluidized bed column (**FK**) is provided with an opening (**FO**) for biomass loading and for receiving the biosorption product, and with a fluidizer assembly for fluidising the biomass, which is equipped with a fan (**FW**) connected via a pipeline (**FR**), provided with a valve (**FZ**), to a heater (**FC**) from which, through a flow meter (**FP**) with a manometer (**FM**), air is introduced into the fluidized bed column (**FK**) from which the air is removed through an outlet conduit (**FW1**), the module for dosing and feeding of the micronutrient solution comprises a tank (**MZ**) with the micronutrient solution, connected by a hose (**MW**) through a pump (**MP**) to a spray nozzle located in the fluidized bed column (**FK**), incorporated in the aerosol generating module comprising a compressor (**SS**) from which compressed air is pumped through a pressure hose (**SW**), a pressure and flow control valve (**SZ**) and a rotameter (**SR**) to the spray nozzle in the fluidized bed column (**FK**).
